# EUROPÄISCHE PATENTANMELDUNG

(11) **EP 1 189 463 A2**
(43) Veröffentlichungstag der Anmeldung: **20.03.2002**
(21) Anmeldenummer: 01810905.8
(22) Anmeldetag: 19.09.2001
(51) Int. Cl.: H04Q 7/22

(54) **Verfahren zum Bereitstellen von Informationen in einem mobilen elektronischen Kommunikationsgerät, ein elektronisches Kommunikationsgerät hierfür und ein elektronisches Kommunikationssystem**

(30) Priorität: 19.09.2000 CH 182500
(71) Anmelder: Bushbird Technologies AG, 8303 Bassersdorf (CH)
(72) Erfinder: Bosch, Gerd, 8309 Birchwil (CH); Vogel, Siegfried, A-1100 Wien (AT)
(74) Vertreter: Liebetanz, Michael, Dipl.-Phys.

(57) **Zusammenfassung**

Bei einem Verfahren zum Bereitstellen von Informationen in einem mobilen elektronischen Kommunikationsgerät (20) wird eine Kommunikationsverbindung (30, 33) mit einer Datenbankeinrichtung (1) mit Speicherzellen (11, 12, 13 aufgebaut. Dazu wird die aktuelle Position (50) des mobilen Kommunikationsgerätes (20) ermittelt. Dann wird in einem Abfrageschritt der Inhalt der entsprechenden angeforderten Speicherzelle (11, 12, 13) über die Kommunikationsverbindung (30, 33) an das mobile Kommunikationsgerät (20) übertragen und wiedergegeben. Ferner werden in einem Speichermodus benutzerdefinierte Informationen vom Benutzer des mobilen Kommunikationsgerätes (20) an die Datenbankeinrichtung (1) übermittelt und diese in einer dem bei Absendung der Informationen entsprechenden Aufenthaltsort (50) des Kommunikationsgerätes (20) zugeordneten Speicherzelle gespeichert, wobei diese Informationen anschliessend von diesem Ort (50) von jedem Benutzer eines entsprechenden Kommunikationsgerätes (20) aus abrufbar sind.

## Beschreibung

Die Erfindung betrifft ein Verfahren zum Bereitstellen von Informationen in einem mobilen elektronischen Kommunikationsgerät, insbesondere einem Mobiltelefon, ein mobiles elektronisches Kommunikationsgerät zum Einsatz des Verfahrens und ein elektronisches Kommunikationssystem.

Einwohner und Besucher einer Stadt, z.B. Touristen oder Geschäftsreisende, sind hinsichtlich von touristischen Informationen, Gesundheitsinformationen; City News, Angeboten, persönlichen Botschaften oder Ähnlichem im Wesentlichen auf die Benutzung von Führern in Buch- oder Prospektform und entsprechenden Karten angewiesen.

Elektronische Datenbanken sind als CD-ROM oder auf anderen elektronischen Datenträgern speicherbar. Dies gilt beispielsweise für Stadtkarten, die über mobile elektronische Kommunikationsgeräte wie Navigationssysteme in Kraftfahrzeugen abrufbar sind.

Elektronische Hilfsmittel mit Fernzugriff, zum Beispiel Mobiltelefone oder mobile Computer, gestatten es mit Hilfe von Protokollen wie WAP Internetseiten abzurufen, auf denen entsprechende gesuchte Informationen zu finden sind. Diese. Vorgehensweise erfordert aber das aktive Suchen des Benutzers nach diesen Informationen, wobei er auf das Wissen um entsprechende Suchmaschinen und/oder Einträge angewiesen ist.

Ausgehend von diesem Stand der Technik liegt der Erfindung die Aufgabe zugrunde, ein Verfahren der eingangs genannten Art anzugeben, mit dem die Informationsbedürfnisse von Nutzern von elektronischen Kommunikationsgeräten besser, effektiver, schneller und einfacher befriedigt werden können. Gleichzeitig liegt der Erfindung die Aufgabe zugrunde, ein mobiles Kommunikationsgerät und ein Kommunikationssystem für die Durchführung dieses Verfahrens anzugeben.

Diese Aufgabe wird für ein Verfahren der der eingangs genannten Art gelöst mit den Verfahrensschritten:
- Aufbau einer Kommunikationsverbindung mit einer Datenbankeinrichtung mit Speicherzellen, die die zu übermittelnden Informationen beinhalten,
- periodisches Wiederholen der folgenden Verfahrensschritte:

- Ermitteln der aktuellen Position des mobilen Kommunikationsgerätes über ein Lokalisierungssystem,
- Erzeugen eines Anforderungssignals in dem Kommunikationsgerät, welches mindestens die aktuelle Position des mobilen Kommunikationsgerätes beinhaltet,
- Übertragen des Anforderungssignals über die Kommunikationsverbindung an die Datenbankeinrichtung,
- Feststellen des dem Standort des mobilen Kommunikationsgerätes zugeordneten Speicherplatz, und mindestens einem der beiden folgenden Verfahrensschritte
- in einem Abfrageschritt Übertragen des Inhalts der entsprechenden Speicherzelle über die Kommunikationsverbindung an das mobile Kommunikationsgerät und Wiedergabe der übertragenen Informationen, und/oder
- in einem Speichermodus Übertragen von benutzerdefinierten Informationen vom Benutzer des mobilen Kommunikationsgerätes an die Datenbankeinrichtung und Speicherung dieser benutzerdefinierten Informationen in einer dem bei Absendung der Informationen entsprechenden Aufenthaltsort des Kommunikationsgerätes zugeordneten Speicherzelle der Datenbankeinrichtung, wobei diese Informationen anschliessend von diesem Ort von jedem Benutzer eines entsprechenden Kommunikationsgerätes aus abrufbar sind.

Damit ist es für Benutzer von solchen Kommunikationsgeräten möglich, Botschaften ihrer Wahl positionsbasiert und zeitunabhängig einzugeben und ebenfalls diese Botschaften positionsbasiert und zeitunabhängig zu empfangen. Es ist ein positionsbasiertes Broadcasting für jedermann. Es können dabei Fakten ihres derzeitigen Aufenthaltsorts, zugehörige historische Tatsachen, Informationen architektonischer Art, Hinweise zu Verpflegungsmöglichkeiten, medizinischen Versorgungsmöglichkeiten vor Ort oder in der Nähe, Angebote von Geschäften und Ähnlichem abgegeben (gesendet) und abgerufen (empfangen) werden. Informationen werden im lokalen Zusammenhang erstellt und abgegeben

Durch die Unterteilung in vordefinierte verschiedene Informationskanäle sind verschiedene Arten von bereitgestellten Informationen möglich.

Die Erfindung wird nun anhand von Ausführungsbeispielen unter Bezugnahme auf die Zeichnungen näher beschrieben. Es zeigen:
- Fig. 1: ein schematisches Schaltbild und Aufbau eines Kommunikationssystems zum Einsatz des Verfahrens gemäss der Erfindung,
- Fig. 2: ein schematisches Diagramm der Informationsspeicherung bei einem Kommunikationssystem nach Fig. 1,
- Fig. 3: eine schematische Skizze des Ablaufs der Informationsübermittlung beim Verfahren nach der Erfindung,
- Fig. 4: eine schematische Darstellung der Benutzer eines Kommunikationssystems gemäss der Erfindung, und
- Fig. 5: eine schematische Darstellung einer Strassenecke mit Speicherorten von Informationen in einer Bildschirm-Darstellung im zentralen Rechner des Kommunikationssystems.

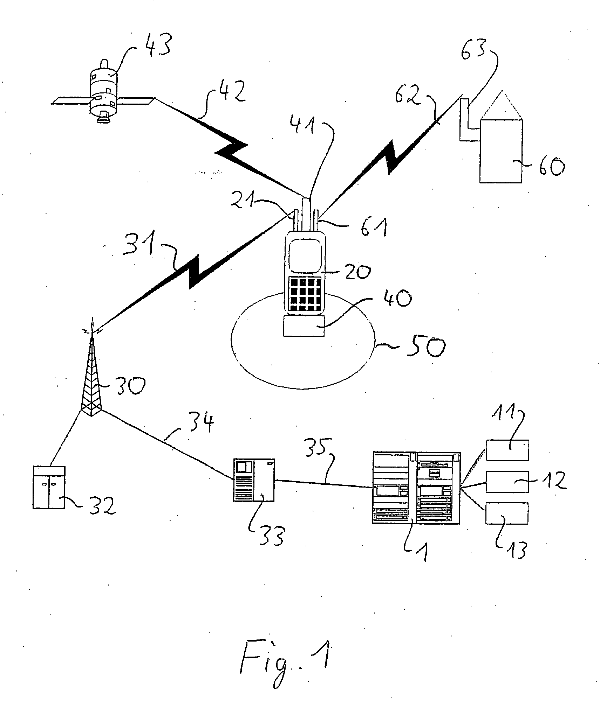

Die Fig. 1 zeigt ein schematisches Schaltbild und den Aufbau eines Kommunikationssystems zum Einsatz des Verfahrens gemäss einem Ausführungsbeispiel der Erfindung. Ein mobiles elektronisches Kommunikationsgerät ist mit dem Bezugszeichen 20 bezeichnet. Dabei kann es sich um ein Mobiltelefon, einen mobilen Kleincomputer, einen Kraftfahrzeug gestützten Computer oder ähnliche Geräte handeln. Wesentlich ist das Vorhandensein einer drahtlosen Kommunikationsmöglichkeit, die hier anhand der Antenne mit dem Bezugszeichen 21 bezeichnet ist. Unter dem Bezugszeichen 21 wird in der Folge der Sende- und Empfangsteil sowie die zugehörige Elektronik verstanden, die zum Aufbau einer Funkverbindung mit einem Telekommunikationsnetz vorgesehen ist. Dieses ist schematisch durch einen Sendemast 30 dargestellt. Bei der Funkverbindung kann es sich um eine Kommunikationsverbindung handeln, die auf dem GSM-Netz, dem UMTS-Netz oder einem vergleichbaren Netz basiert.

Ferner verfügt das mobile elektronische Kommunikationsgerät 20 über ein Mittel zur Ortsbestimmung, welches schematisch als Bestandteil 40 dargestellt ist. Dieses Mittel zur Ortsbestimmung ist fähig, basierend auf einer abgefragten Information, den jeweiligen Standort des mobilen elektronischen Kommunikationsgerätes 20 zu bestimmen. Dies kann beispielsweise über das Satelliten gestützte GPS-System erfolgen, welches mit den Bezugszeichen 41, 42 und 43 für Antenne, Übertragungsweg und Satellit schematisch dargestellt ist. Damit ist der jeweilige Standort 50 des Kommunikationsgerätes 20 mit hoher Genauigkeit feststellbar. Eine andere Möglichkeit zur Feststellung des Ortes des Kommunikationsgerätes 20 ist das drahtlose Kommunikationssystem 30 selber, zum Beispiel beim Einsatz und mit Hilfe von GSM oder UMTS. Dieses verfügt jeweils über einen Rechner 32, mit dem die jeweilige Funkzelle feststellbar ist, in der sich das Kommunikationsgerät 20 befindet. Die Funkzelle ist zur Vereinfachung auch mit dem Bezugszeichen 50 bezeichnet, obwohl die Dimensionen der Genauigkeit zum erstgenannten GPS-System unterschiedlich sein können. Eine dritte Möglichkeit zur Ortsbestimmung bilden feste ortsgestützte Funkbaken 63, die die jeweilige Position relativ zu dem Ort 60 über einen Übertragungsweg 62 an eine Antenne 61 des Kommunikationsgerätes 20 übermitteln. Es ist klar, dass die Antennen 21, 41 und/oder 61 in eine integriert sein können, und/oder dass nur eines der drei hier genannten (oder ein weiteres nicht dargestelltes) System eingesetzt werden muss, um es dem Mittel zur Ortsbestimmung 40 zu ermöglichen, den jeweiligen Standort des Kommunikationsgerätes 20 aus den jeweiligen Daten zu ermitteln.

Das Kommunikationsgerät 20 baut bei Anforderung von seinem Benutzer eine Funkverbindung mit dem Kommunikationsnetz 30 auf. Dies ist fest einprogrammiert oder geschieht auf Aufruf. Dabei entsteht über den Verbindungsrechner 33 eine Verbindung zu einem zentralen Rechner 1 des Kommunikationssystems gemäss der Erfindung. Die Wege 34 und 35 und die Art der dazwischenliegenden Verbindungsrechner 33 hängt wesentlich von der gewählten Übertragungsart ab. Teile davon können Telefonienetze sein, Teile können Verbindungen im Internet sein, wesentlich ist der Aufbau und das Anmelden des Kommunikationsgerätes 20 an dem zentralen Rechner 1.

Dabei übermittelt das Kommunikationsgerät 20 Informationen, die den Benutzer des Kommunikationsgerätes 20 als berechtigten Benutzer ausweisen, gegebenenfalls unter Hinweis auf entstehende Kosten, die abgebucht werden, in einem Abonnement enthalten sein können oder ebenfalls erst im Einzelfall abgerechnet werden. Anschliessend wird im einfachsten Fall lediglich die von dem Mittel zur Ortsbestimmung 40 ermittelte Position 50 übertragen. Daraufhin ermittelt der zentrale Rechner 1 die zu dieser Position 50 zugehörige Information in seinen Speicherfeldern 11, 12, 13,... und übermittelt diese über den inversen Weg zurück zu dem Kommunikationsgerät 20. Es kann auch ein unterschiedlicher Weg gewählt werden, wie es insbesondere in paketvermittelten Diensten üblich ist.

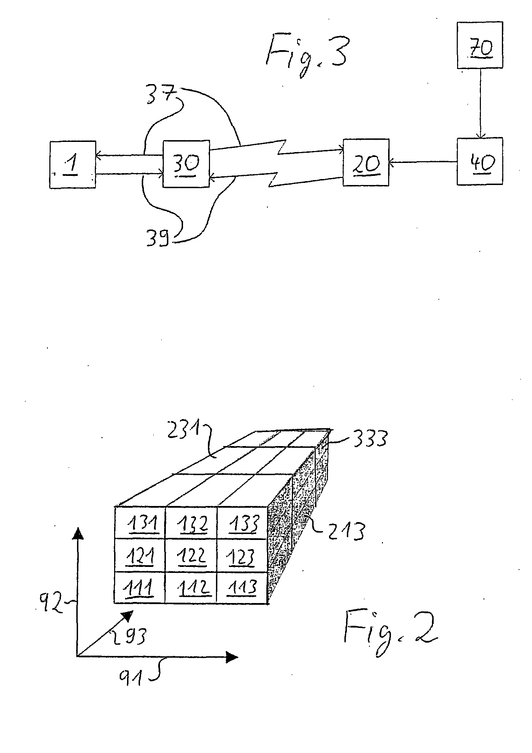

Der zentrale Rechner 1 beinhaltet eine Datenbank von den besagten unterschiedlichen Informationsspeicher 11, 12, 13...... Die Inhalte der Informationsspeicher 11, 12, 13... werden nun näher im Zusammenhang mit der Fig. 2 beschrieben. Diese Fig. 2 zeigt ein schematisches Diagramm der Informationsspeicherung bei einem Kommunikationssystem nach Fig. 1. Jeder Würfel entspricht einer Speicherzelle 11, etc. aus Fig. 1. Dabei sind die Würfel einerseits in Orte unterteilt. Dies ist mit der Richtung 91 gekennzeichnet. Die Würfel 111, 112, 113 etc. entsprechen Informationsinhalten, die verschiedenen Orten zugeordnet sind. Andererseits sind die Speicherwürfel in Informationskanäle unterteilt. Dies ist mit der Richtung 92 gekennzeichnet. Die Würfel 111, 121, 131 etc. entsprechen Informationsinhalten, die demselben Ort zugeordnet sind. Sie unterscheiden sich durch ihren vordefinierten Inhalt, der wie eingangs gesagt, beispielsweise in touristische Informationen, Hinweise auf Verpflegungsmöglichkeiten und Restaurants, Werbeübermittlungen und persönliche Botschaften unterteilt sein kann. Schliesslich kann das Informationsangebot in verschiedenen Sprachen vorliegen. Dies ist mit der Richtung 93 gekennzeichnet. So betreffen die Speicherplätze 133, 233 und 333 Informationen aus demselben Informationskanal für denselben Ort aber in unterschiedlichen Sprachen.

Auf dem Übertragungsweg 31, 34 von dem mobilen Kommunikationsgerät 20 eines Benutzers zum Netzrechner 1 des Produkteanbieters kann die eingesetzte Sprache durch Wahl des Benutzers, durch automatische Wahl auf der Basis der von dem Netzrechner 1 ausgewerteten Abonnenteninformation oder der voreingestellten Betriebssprache des mobilen Kommunikationsgerätes 20 erfolgen, um einige Möglichkeiten zu nennen. Der Benutzer kann somit durch Vorauswahl der von ihm gewünschten Informationen (Kanal 92, Sprache 93) ein Raster festlegen, welches mit dem Informationsangebot in dem Netzrechner zu jedem Zeitpunkt und Ort 50 zu 91 verglichen wird. Beim Starten des Kommunikationskanals, was automatisch beim Anschalten des Gerätes oder durch Wahl des Benutzers geschehen kann, wird dem Netzrechner 1 automatisch die Benutzerposition 50, d.h. die Position des mobilen Kommunikationsgerätes 20, übermittelt. Vorab oder daraufhin wählt der Benutzer den ihm genehmen Informationskanal 92, der mit einem logischen "UND" mit der Sprache 93 und dem jeweiligen Aufenthaltsort 50, 91 des Benutzers verbunden ist.

Es ist möglich, dass neben den dargestellten drei Dimensionen die Informationen noch in weiteren Dimensionen, also in einer höher dimensionalen Matrix abgelegt sind. Diese weiteren Dimensionen können beispielsweise Altersgruppen, Preisklassen und Tiefe der Informationen sein.

Die Informationen selber sind vorzugsweise multimedial. Es können Sprachinformationen sein, es können Bildinformationen und Kombinationen davon gespeichert sein. Insbesondere ist es auch möglich, auf der Basis des Mittels zur Ortsbestimmung 40 auch die Orientierung des Gerätes 20 zu ermitteln, um somit im Sinne eines Navigationssystems die Richtung darzustellen, in welcher das Gerät 20 gehalten wird. Dies kann zur Orientierung auf Karten oder als Hinweis auf die einzuschlagende Richtung vorgesehen sein.

Die vorab in den Speicherzellen 11, 12, 13 gespeicherte Information weist eine Einteilung in verschiedene einzel abrufbare Informationseinheiten auf. Unter diesen können sich befinden: allgemeine Informationen hinsichtlich eines Landes, allgemeine Informationen hinsichtlich einer Stadt, Veranstaltungskalender der Stadt oder des Viertels, Weganweisungen für Stadt- oder Ortsführungen, Verpflegungsmöglichkeiten, nützliche Hinweise zu öffentlichen Diensten und hier insbesondere zu Polizei und medizinischen Diensten etc. sowie von Benutzern selbst bereitgestellte Informationen.

Ein Vorteil des erfindungsgemässen Verfahrens liegt auch in der Möglichkeit der Übermittlung von akustischen Informationen, welche einfacher als schriftliche Informationen aufgenommen werden können. Bei Einsatz eines grafikfähigen mobilen Kommunikationsgerätes ist ebenfalls die Übermittlung von Zeichnungen, Skizzen und anderen optischen Informationen möglich.

Die Erfindung beruht auf der Kombination eines mobilen Zuganges (für das Senden und Empfangen) zu einem die bereitzustellenden Informationen 11, 12, 13,.... beinhaltenden Zentralrechners 1 über Telefonwählleitungen 31 und das Internet 34, 35 in Verbindung mit Positioniertechnologie 40 des mobilen Kommunikationsgerätes 20. Die Positioniertechnologie 40 des mobilen Kommunikationsgerätes 20 kann durch das Satelliten gestützte GPS-System 41, 42, 43 realisiert sein oder durch eine Zellidentifikation 32 im mobilen Kommunikationsnetz (z.B. GSM oder UMTS) oder durch Funkbaken 60, 61, 62, 63.

Ein Vorteil des Verfahrens liegt in der dezentralen, durch die Personen selbst durchführbaren ständigen Aktualisierbarkeit der Informationen vor Ort, d.h. positionsbasiert, der Zellinhalte 111, 112, ... , der Erweiterbarkeit und der einfachen Bereitstellung in Ausbaustufen in verschiedenen Sprachen.

Der Einsatz des mobilen Kommunikationsgerätes 20 ist nicht auf Fussgänger beschränkt, sondern jegliches Transportmittel, wie das Auto, der Zug oder andere öffentliche Verkehrsmittel, können benutzt werden. Dieser Vorteil betrifft insbesondere touristische und nützliche Hinweise bei der Durchfahrt durch Landschaften in Kraftfahrzeugen, bei denen entsprechende Örtlichkeiten nicht unbedingt an der benutzten Strasse liegen. Damit ist es viel einfacher, gezielt ein Hotel, Restaurant etc. anzufahren, anstatt im Verkehr in einer fremden Umgebung auf unbekannte Schilder zu schauen und so den Verkehr weniger zu beachten. Dabei kommt ein weiterer Vorteil zum Tragen, dass nämlich, beispielsweise ein Hotel oder Restaurant bei einem Eintrag im Zentralrechner 1 gleichzeitig Ruhetage (und Preise) nennen kann. Damit kann der zu übermittelnde Eintrag zu Hotels an einem Ruhetag entsprechend markiert sein oder gar nicht übertragen und somit zeitweise aus einem entsprechenden Informationskanal gefiltert werden.

Als mobiles Kommunikationsgerät 20 kommen neben Mobiltelefonen auch andere mit Datenübertragungsmöglichkeiten versehene Rechner, wie sogenannte Laptops oder Palmtops, in Frage.

Beispielsweise können vier Kanäle 92 vorgesehen sein, "Allgemeine Informationen" (hinsichtlich des Landes oder. der aktuellen Stadt) und "Spezifische Informationen" (Informationen bezüglich dem betreffenden Ort (Punkt)), wobei der notwendige zu unterschreitende Abstand vom mobilen Kommunikationsgerät 20 am Ort 50 zu dem Ort, für den die Information gespeichert ist, auf dem Lande einige Kilometer betragen kann, während er in Städten zumeist im Bereich von wenigen Metern bis einigen 100 Metern beträgt. Schliesslich können Einzelpunkte mit spezifischen Informationen zu dem jeweiligen Gebäude 60 vorgesehen sein, die auch über eigene Funkbaken 63 verfügen können, die zusätzlich zu den sonstigen Positioniersystemen arbeiten können.

Komfortmerkmale des Verfahrens erlauben ein Stoppen der Informationsübermittlung, eine Wiederholung derselben und das Abspielen von Richtungshinweisen, um sich zu einem angegebenen Punkt zu bewegen. Neben dem Einspeisen von Informationen in die Speicherzellen 111, ... durch den Informationsanbieter selbst sind zwei weitere vorteilhafte Anwendungen des Verfahrens möglich. Zum einen können Informationsanbieter Standorte festlegen, an denen von Dritten für kommerzielle Anwendungen bereitgestellte Information in gewissen Kanälen an den Nutzer übertragen werden. Dies können beispielsweise Informationen von Geschäften hinsichtlich ihres derzeitigen Angebotes sein oder von anderen kommerziellen Informationen, die dann von diesem Dritten in entsprechende zur Verfügung gestellte Speicherzellen eingespeist werden. Insbesondere ist es aber auch möglich, dass jeder - auch private - Benutzer selber eine eigene Information für einen gewissen Zeitraum für diesen gewissen Ort übermittelt, die dann an einen anderen Benutzer, der an diesem Ort vorbei geht, übertragen wird, wobei diese Übertragung zeitunabhängig ist. Die Übertragung kann möglicherweise auch benutzergesteuert auf Tageszeiten, Wochentage etc. beschränkt werden. Dabei kann es sich um private Werbeangebote, wie beispielsweise für die Vermietung von Wohnraum, dem Verkauf von grösseren mobilen Gegenständen, wie Kraftfahrzeugen oder Booten, handeln, oder um den Hinweis auf Veranstaltungen, die an sich mit dem jeweiligen Ort nicht direkt zu tun haben. Somit ist die Erstellung eines privaten Informationspunktes für jedermann möglich, an dem die eigene Nachricht frei verteilt werden kann.

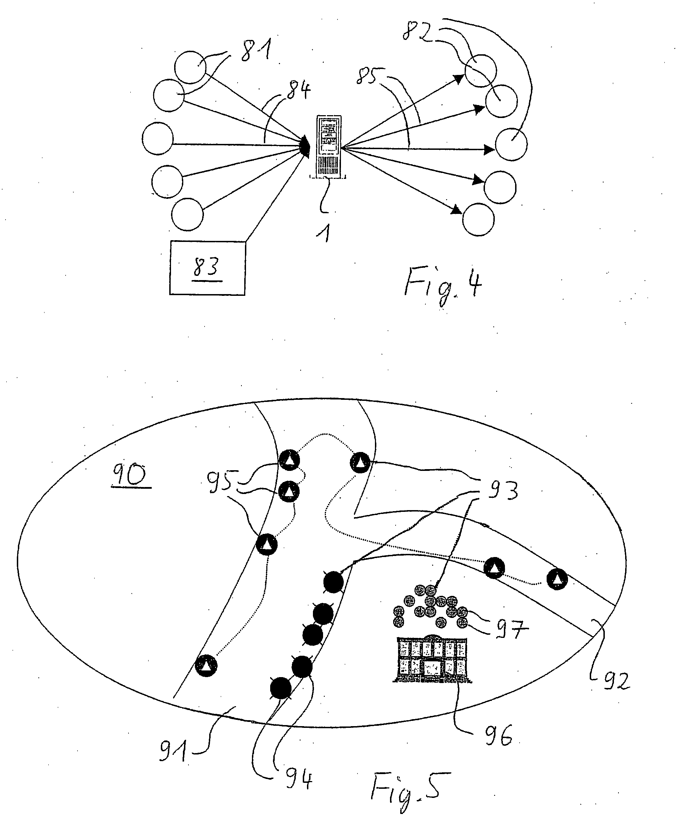

Die Fig. 3 zeigt eine schematische Skizze des Ablaufs der Informationsübermittlung beim Verfahren nach der Erfindung. Das Verfahren zum. Bereitstellen von Informationen in einem mobilen elektronischen Kommunikationsgerät 20 beinhaltet das kontinuierliche Abfragen der aktuellen Position 50 von dem mobilen Kommunikationsgerät 20 über ein Lokalisierungssystem 40. Diese aktuelle Position 50 wird von einem externen Positionsgeber 70 ausgehend berechnet. Dabei kann es sich nach Fig. 1 beispielsweise um GPS-Satelliten 43, Zellinformationen aus einem Rechner 32 oder Signale von Funkbaken 63 handeln. Dann wird jeweils über ein drahtloses Kommunikationssystem 30 ein Anforderungssignal 37 an eine Datenbankeinrichtung 1 abgegeben wird, welches die aktuelle Position 50 des mobilen Kommunikationsgerätes 20 und eventuell einen Informationskanalanzeiger und einen Sprachenanzeiger beinhaltet. Das Anforderungssignal 37 ist dabei unabhängig von seiner eventuell unterschiedlichen Form in einem Mobilfunknetz und im Internet zu betrachten, da es nur auf seinen Inhalt ankommt. Die Datenbankeinrichtung 1 stellt dann in ihrer mehrdimensional aufgebauten Datenbank den Speicherplatz fest, der mit dem Standort 50 der mobilen Kommunikationseinrichtung 20 und gegebenenfalls mit Sprache und dem angeforderten Informationskanal übereinstimmt. Der Inhalt der entsprechenden Speicherzelle wird dann auf dem umgekehrten Weg 39 an die mobile Kommunikationseinrichtung 20 übermittelt und dort zur Ausgabe gebracht.

Bei einer Ausgestaltung des Verfahrens ist dies weiterhin dadurch gekennzeichnet, dass in eine dem jeweiligen Aufenthaltsort des Kommunikationsgerätes zugeordnete Speicherzelle vom Benutzer des mobilen Kommunikationsgerätes eine ortsabhängige Einspeisung von Informationen möglich ist, die jeweils nur für diesen Ort abrufbar sind.

Die Grösse des Ortes 50 kann beispielsweise einen Radius von 10, 20 oder 50 Metern oder einige Kilometer beinhalten. Dieser Ort kann auch gestaffelt nach Anzahl der gespeicherten Nachrichten, einem bezahlten Preis oder anders, z.B. mit mit wachsendem Abstand eines vorgegebenen Ortes kleiner werdenden Wahrscheinlichkeiten ermittelt werden. Die Grösse des Ortes kann also insbesondere vom Bereitsteller selbst und/oder vom Informationsdienstanbieter anhand einzelner oder verschiedener auch kombinierter Parameter festgelegt werden.

Anstelle eines zentralen Rechners 1 können auch dezentrale Rechner vorgesehen sein, die jeweils für die lokale Verarbeitung und Speicherung von Informationen verantwortlich sind, wobei eingehende Anfragen, zum Beispiel räumlich an den diese Speicherzellen aufweisenden Rechner weitergeleitet werden. Dies ist insbesondere bei Städteinformationen sinnvoll, nämlich dass Informationen einer Stadt auch in einem von dortigem Personal gewarteten Rechner gespeichert und nachgeführt werden.

Die Fig. 4 zeigt eine Darstellung der Benutzer 81, 82 und 83 eines Kommunikationssystems gemäss der Erfindung, das schematisch mit seinem zentralen Rechner 1 dargestellt ist. Der Benutzer 83 ist ein zumeist kommerzieller Inhaltsbereitsteller, der seine Informationen zentral beim Betreiber des Kommunikationssystems registriert. Dies können beispielsweise Stadt oder gebietsbezogene Wetterinformationen oder allgemein im Abonnementsverfahren übermittelte Informationen sein. Daneben stehen die Benutzer 81, die ortsbezogen, privat oder kommerziell, Informationen in das System einspeisen. Diese Informationen stehen dann für die Abfrage durch Benutzer 82 zur Verfügung. Dabei können die Vorgänge des Sendens 84 und des Empfangens 85 von einem und demselben Benutzer 81, 82 in einer einzigen Kommunikationssitzung durchgeführt werden.

Die Fig. 5 zeigt schliesslich eine schematische Darstellung einer Strassenecke mit Speicherorten von Informationen in einer Bildschirm-Darstellung im zentralen Rechner 1 des Kommunikationssystems. Dargestellt sind zwei sich kreuzende Strassen 91 und 92 in einem Stadt- oder Landgebiet 90. Dabei können die seitlichen Linien beispielsweise die Bürgersteige sein. Mit den Punkten 93 sind jeweils Orte mit Informationsinhalten bezeichnet, wobei unterschiedliche Symbole auf unterschiedliche Informationskanäle hindeuten. Dabei kann es sich einerseits beispielsweise um Einkaufspunkte 94 einer Ladenstrasse handeln. Andere Angebot auf der anderen Strassenseite der Strasse 91 sind Übernachtungsangebote 95. Ein Beispiel einer intensiven Nutzung durch private Einspeiser ist in der Nähe eines Universitäts-, Schul-oder Freizeitgebäudes 96 zu sehen. Hier sind eine Vielzahl von privaten Informationen 97 auf engem Raum dargestellt. Weitere Modifikationen und Ergänzungen sind für den Fachmann leicht ersichtlich und vorzunehmen, ohne den Rahmen der Erfindung zu verlassen, der durch die beigefügten Ansprüche festgelegt ist.

## Patentansprüche

1. Verfahren zum Bereitstellen von Informationen in einem mobilen elektronischen Kommunikationsgerät (20) mit den Verfahrensschritten:
- Aufbau einer Kommunikationsverbindung (30; 37, 39) mit einer Datenbankeinrichtung (1) mit Speicherzellen (11, 12, 13; 111, 112,...), die die zu übermittelnden Informationen beinhalten,
- einmaliges oder periodisches Wiederholen der folgenden Verfahrensschritte:
- Ermitteln der aktuellen Position (50) des mobilen Kommunikationsgerätes (20). über ein Lokalisierungssystem (40),
- Erzeugen eines Anforderungssignals (37) in dem Kommunikationsgerät (20), welches mindestens die aktuelle Position (50) des mobilen Kommunikationsgerätes (20) beinhaltet,
- Übertragen des Anforderungssignals (37) über die Kommunikationsverbindung (30; 37) an die Datenbankeinrichtung (1),
- Feststellen des dem Standort (50) des mobilen Kommunikationsgerätes (20) zugeordneten Speicherplatz (11, 12, 13; 111, 112,...), und
mindestens einem der beiden folgenden Verfahrensschritte
- in einem Abfrageschritt Übertragen des Inhalts der entsprechenden Speicherzelle (11, 12, 13; 111, 112,...) über die Kommunikationsverbindung (30; 39) an das mobile Kommunikationsgerät (20) und Wiedergabe der übertragenen Informationen, und/oder
- in einem Speichermodus Übertragen von benutzerdefinierten Informationen vom Benutzer des mobilen Kommunikationsgerätes (20) an die Datenbankeinrichtung (1) und Speicherung dieser benutzerdefinierten Informationen in einer dem bei Absendung der Informationen entsprechenden Aufenthaltsort (50) des Kommunikationsgerätes (20) zugeordneten Speicherzelle der Datenbankeinrichtung (1), wobei diese Informationen anschliessend von diesem Ort (50) von jedem Benutzer eines entsprechenden Kommunikationsgerätes (20) aus abrufbar sind.

2. Verfahren nach Anspruch 1, **dadurch gekennzeichnet, dass** das Anforderungssignal (37) einen Informationskanalanzeiger und/oder einen Sprachenanzeiger beinhaltet.

3. Verfahren nach Anspruch 1 oder Anspruch 2, **dadurch gekennzeichnet, dass** das Lokalisierungssystem (40) eine GPS-Satelliten (43) einsetzende, Zellinformationen (32) der Kommunikätionsverbindung (30) auswertende oder Signale von Funkbaken (63) erfassende Einrichtung umfasst.

4. Verfahren nach einem der Ansprüche 1 bis 3, **dadurch gekennzeichnet, dass** der Inhalt einer Speicherzelle innerhalb der Datenbankeinrichtung (1) dann an ein Kommunikationsgerät (20) übermittelt wird, wenn der Aufenthaltsort (50) des Kommunikationsgerätes (20) von dem in der Datenbankeinrichtung (1) mit der Information hinterlegten Ort maximal um einen vorbestimmten Betrag von 10 Meter bis einige Kilometer abweicht.

5. Verfahren nach einem der Ansprüche 1 bis 4, **dadurch gekennzeichnet, dass** das Anforderungssignal eine Identifikationskennung für das benutzte Kommunikationsgerät aufweist.

6. Kommunikationsgerät (20) zum Einsatz bei einem Verfahren nach einem der Ansprüche 1 bis 5, mit einer Kommunikationseinrichtung (21) zum Aufbau einer Kommunikationsverbindung (30; 37, 39) und mit einer Wiedergabevorrichtung für über die Kommunikationsverbindung (30; 37, 39) übermittelte Daten, **dadurch gekennzeichnet, dass** es ein Lokalisierungssystem (40) umfasst, mit dem die aktuelle Position (50) des Kommunikationsgerätes (20) ermittelbar ist, und dass eine Steuereinrichtung vorgesehen ist, mit der ein über die Kommunikationsverbindung (30; 37, 39) übertragbares Anforderungssignal (37) erzeugbar ist, welches mindestens die aktuelle Position. (50) des mobilen Kommunikationsgerätes (20) beinhaltet,

7. Kommunikationssystem mit einem Kommunikationsgerät (20) nach Anspruch 6 zum Einsatz bei einem Verfahren nach einem der Ansprüche 1 bis 5, **dadurch gekennzeichnet, dass** eine Datenbankeinrichtung (1) mit Speicherzellen (11, 12, 13; 111, 112,...), in denen die zu übermittelnden Informationen abgespeichert sind, mit einer Empfangseinrichtung, mit der auf ein Anforderungssignal (37) eines Kommunikationsgerätes (20) hin ein dem Standort (50) des mobilen Kommunikationsgerätes (20) zugeordneter Speicherplatz (11, 12, 13; 111, 112,...) ermittelbar ist, und mit einer Sendeeinrichtung versehen ist, mit der die Inhalte der entsprechenden ausgewählten Speicherzellen (11, 12, 13; 111, 112,...) über die Kommunikationsverbindung (30; 39) an das mobile Kommunikationsgerät (20) übertragen werden.
